(19) Europäisches Patentamt
European Patent Office
Office européen des brevets

(11) **EP 3 917 233 B1**

(12) **FASCICULE DE BREVET EUROPÉEN**

(45) Date de publication et mention
de la délivrance du brevet:
**26.02.2025   Bulletin 2025/09**

(21) Numéro de dépôt: **21175621.8**

(22) Date de dépôt: **25.05.2021**

(51) Classification Internationale des Brevets (IPC):
***H04W 72/02*** *(2009.01)*

(52) Classification Coopérative des Brevets (CPC):
**H04W 72/02**

(54) **PROCÉDÉ DE SÉLECTION DE CANAL DE COMMUNICATION**

AUSWAHLVERFAHREN FÜR EINEN KOMMUNIKATIONSKANAL

SELECTION PROCESS FOR A COMMUNICATION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.05.2020   FR 2005572**

(43) Date de publication de la demande:
**01.12.2021   Bulletin 2021/48**

(73) Titulaire: **Sagemcom Broadband SAS
92270 Bois-Colombes (FR)**

(72) Inventeurs:
• **ALARCON, Laurent
92500 RUEIL MALMAISON (FR)**
• **LALAM, Massinissa
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
**EP-A1- 2 907 334        EP-B1- 2 907 334
US-A1- 2020 119 836**

**Description**

DOMAINE TECHNIQUE

La présente invention concerne un procédé de sélection d'un canal de communication dans un réseau de communication sans-fil. Plus particulièrement, la présente invention trouve son application dans des systèmes d'extension de couverture radio.

ETAT DE LA TECHNIQUE ANTERIEURE

Dans les réseaux locaux LAN (« Local Area Network » en anglais), des systèmes d'extension de couverture radio peuvent être utilisés afin d'augmenter la portée de ces réseaux locaux LAN en coordonnant plusieurs points d'accès AP (« Access Point » en anglais) répartis dans l'espace. Ces différents points d'accès AP sont intégrés à des dispositifs noeuds de communication, appelés aussi *extendeurs* (« extenders » en anglais), interconnectés grâce à un réseau d'acheminement (« backhaul network » en anglais) et mettent tous à disposition un même réseau local sans-fil WLAN (« Wireless Local Area Network » en anglais). Tous ces points d'accès AP utilisent ainsi un même identifiant de réseau, appelé *identifiant de jeu de services* SSID (« Service Set IDentifer » en anglais) dans la terminologie de la famille de standards IEEE 802.11 sur laquelle repose la technologie Wi-Fi (marque déposée), par exemple « my_home », et un même mot de passe (aussi appelé *clef de sécurité)*. On peut parler alors de réseau frontal (« fronthaul » en anglais), auquel des équipements utilisateurs sont destinés à se connecter. Ainsi, l'extension de couverture radio est transparente pour ces équipements utilisateurs connectés au réseau local sans-fil WLAN. A noter que dans certaines implémentations (par exemple « easyMesh »), le réseau frontal peut être utilisé comme réseau d'acheminement.

Dans les environnements résidentiels, une passerelle résidentielle (« residential gateway » en anglais) fournit un accès à un réseau étendu WAN (« Wide Area Network » en anglais), tel que l'Internet, pour des terminaux qui lui sont connectés directement via des interfaces de réseau local LAN filaires (e.g., Ethernet) ou sans-fil (e.g., Wi-Fi (marque déposée)) embarquées dans la passerelle résidentielle, ou indirectement via un système d'extension de couverture radio tel qu'évoqué ci-dessus. Ainsi, la passerelle résidentielle embarque un ou plusieurs points d'accès AP qui opèrent typiquement sur des bandes fréquentielles à 2.4 GHz et 5 GHz, et bientôt à 6 GHz. Ces points d'accès AP sont opérés par des interfaces radios, chaque interface radio étant dédiée à une desdites bandes fréquentielles et pouvant contenir un ou plusieurs points d'accès AP. Chaque interface radio choisit au moins un canal de communication de position prédéfinie sur la bande fréquentielle concernée. Typiquement, un premier canal de communication, dit *canal primaire,* est choisi afin de diffuser des balises (« beacons » en anglais) de tous les points d'accès AP que l'interface radio contient, et un ou plusieurs canaux de communication complémentaires (généralement adjacents au canal primaire), dits *canaux secondaires,* sont choisis afin de permettre une augmentation de débit de communication par agrégation de capacités de communication. Chaque point d'accès AP est identifié dans les balises qui le concernent par un identifiant unique, appelé *identifiant de jeu de services de base* BSSID (« Basic Service Set IDentifier » en anglais) dans la terminologie de la famille de standards IEEE 802.11.

Lorsque le réseau d'acheminement est en place, un dispositif noeud (appelé « parent ») met en place un premier point d'accès AP (pour le réseau d'acheminement) via au moins une de ses interfaces radio et un ou plusieurs autres dispositifs noeuds (appelé « enfants ») s'y connectent grâce à une fonctionnalité de station, comme le ferait un équipement utilisateur vis-à-vis d'un point d'accès AP classique. Un dispositif noeud enfant utilise une interface radio en adéquation avec l'interface radio qui met en oeuvre le premier point d'accès AP du dispositif noeud parent. Cette interface radio du dispositif noeud enfant peut elle-même embarquer un second point d'accès AP pour étendre la couverture du réseau d'acheminement, de sorte que d'autres dispositifs noeuds du réseau d'acheminement puissent s'y connecter à leur tour. Alors, le second point d'accès AP (appartenant au réseau d'acheminement) utilise le même canal de communication, à savoir le même canal primaire, que celui imposé par le premier point accès AP à la fonctionnalité de station de l'interface radio qui embarque le second point d'accès AP. Si un autre point d'accès AP est aussi mis en place par la même interface radio pour le réseau frontal, alors le même canal de communication, à savoir le même canal primaire, est aussi utilisé par cet autre point d'accès AP (du fait qu'il appartient à la même interface radio).

Le réseau d'acheminement est coordonné par un dispositif noeud de communication, appelé *dispositif noeud maître*. Dans les environnements résidentiels, le rôle de dispositif noeud maître est généralement assuré par la passerelle résidentielle, celle-ci présentant une

position stratégique de concentration de flux de données vis-à-vis de l'accès au réseau étendu WAN et disposant notamment de plus de capacités de traitement que de simples extendeurs (la passerelle résidentielle pouvant être aussi considérée, du point de vue du réseau d'acheminement, comme un extendeur).

Ainsi, lorsque le dispositif noeud maître choisit un canal de communication, celui-ci se répercute dans l'ensemble du réseau d'acheminement de sorte que tous les points d'accès AP formant le réseau d'acheminement utilisent ce canal de communication. Typiquement, tous ces points d'accès AP ont le même canal primaire, dès lors que c'est le même type d'interface radio (e.g., à 5 GHz) qui est utilisé pour supporter le réseau d'acheminement.

Cependant, le dispositif noeud maître choisit ce canal de communication en fonction des informations dont il dispose localement (scan de son propre environnement radio, niveau de bruit, interférences...), appelé généralement mécanisme de sélection automatique de canal ACS (« Automatic Channel Sélection » en anglais), et comme ce choix ne tient pas compte des environnements radio propres aux autres dispositifs noeuds du réseau d'acheminement, ce choix de canal de communication peut ne pas être satisfaisant du point de vue d'au moins un autre dispositif noeud du réseau d'acheminement, ce qui peut nuire à la performance (débit, retransmissions...) du réseau local sans-fil WLAN dont la couverture est étendue.

Les brevets US2020/119836 et EP2907334 divulguent un procédé pour sélectionner un canal de communication dans un réseau de communication sans-fil.

Il est alors souhaitable de pallier ces inconvénients de l'état de la technique. Il est notamment souhaitable de fournir une solution qui permette d'améliorer la performance (débit, retransmissions...) d'un réseau local sans-fil WLAN comportant un réseau d'acheminement, tel qu'évoqué ci-dessus, qui est destiné à étendre la couverture radio dudit réseau local sans-fil WLAN.

EXPOSE DE L'INVENTION

L'invention est définie par les revendications indépendantes. Les modes de réalisation sont définis par les revendications dépendantes.

Il est proposé un premier procédé pour sélectionner un canal de communication dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil. Un même premier canal de communication, sélectionné par un dispositif noeud maître du réseau d'acheminement, est utilisé dans le réseau d'acheminement pour interconnecter lesdits dispositifs noeuds. Le procédé comporte les étapes suivantes effectuées par chaque dispositif noeud du réseau d'acheminement : effectuer une évaluation de conditions de transmission de son environnement radio ; calculer, pour chaque canal de communication à disposition dudit dispositif noeud, un score représentatif d'une qualité de transmission via ledit canal de communication d'après l'évaluation effectuée. De plus, lorsque, du point de vue d'un dit dispositif noeud du réseau d'acheminement, au moins un second canal de communication montre un meilleur score que le premier canal de communication, le procédé comporte en outre les étapes suivantes effectuées par le dispositif noeud maître : obtenir, de chaque dispositif noeud du réseau d'acheminement, le score du premier canal de communication et le score d'au moins un dit second canal de communication, pour effectuer une évaluation de changement de canal de communication ; décider de changer, ou pas, de canal de communication utilisé dans le réseau d'acheminement, en fonction des scores obtenus. Ainsi, la performance (débit, retransmissions...) d'un réseau de communication sans-fil dont la couverture radio est étendue par un tel réseau d'acheminement est améliorée grâce à la prise en compte, via les scores, des environnements radio des différents dispositifs noeuds du réseau d'acheminement. De plus, en passant par des calculs de scores, le volume d'informations / données échangées dans le réseau d'acheminement pour permettre la sélection de canal de communication est limité.

Selon un mode de réalisation particulier, suite à l'évaluation de conditions de transmission de son environnement radio, lorsqu'un dispositif noeud autre que le dispositif noeud maître évalue qu'au moins un second canal de communication montre un meilleur score que le premier canal de communication, le dispositif noeud en question transmet audit dispositif noeud maître un message de demande de changement de canal de communication incluant, au moins, un identifiant dudit au moins un second canal de communication ayant obtenu le meilleur score et son score, ainsi que le score obtenu par le premier canal de communication. Puis, le dispositif noeud maître sonde chacun des dispositifs noeuds du réseau d'acheminement autres que celui ayant transmis ledit message de demande de changement de canal de communication pour obtenir le score de chaque canal de communication auquel se réfère le message de demande de changement de canal de communication.. Ainsi, le dispositif noeud maître peut évaluer de basculer vers tout autre canal de communication qui serait perçu comme meilleur du point de vue du dispositif noeud ayant transmis le message de demande de changement de canal de communication.

Selon un mode de réalisation particulier, le score $S_i$ attribué à chaque canal de communication $i$ est une somme pondérée de notes $n_{i,j}$ attribuées à différentes métriques $j$ suite à l'évaluation des conditions de transmission de l'environnement radio vis-à-vis dudit canal de communication $i$, en utilisant des poids prédéterminés $\alpha_{i,j}$ servant à privilégier une métrique plutôt qu'une autre pour le canal de communication $i$, de sorte que :

$$S_i = \sum_j \alpha_{i,j} . n_{i,j}$$

avec

$$\forall i, \forall j, \sum_{j} \alpha_{i,j} = 1$$

Ainsi, le score est aisément calculé.

Selon un mode de réalisation particulier, lorsqu'une métrique n'est pas observable pour le canal de communication $i$, une note maximale est attribuée à ladite métrique, ou ladite métrique est sortie du calcul de score sans ajuster les poids des autres métriques, ou ladite métrique est sortie du calcul de score en ajustant proportionnellement les poids des autres métriques pour assurer que leur somme soit égale à 1. Ainsi, il est aisément pris en compte des métriques différentes pour des canaux de communication différents et/ou pour des dispositifs noeuds différents.

Selon un mode de réalisation particulier, les métriques sont choisies parmi : un niveau bruit ambiant pour le canal de communication $i$ ; une quantité de points d'accès détectés sur le canal de communication $i$, hors points d'accès du réseau d'acheminement ; une proportion du temps où le canal de communication $i$ est vu comme libre ; un taux de paquets retransmis ; une quantité de points d'accès, hors points d'accès du réseau d'acheminement, utilisant un canal de communication adjacent au canal de communication $i$; une quantité de points d'accès, hors points d'accès du réseau d'acheminement, détectés avec une puissance supérieure à un seuil prédéterminé. Ainsi, le champ des métriques possibles est vaste.

Selon un mode de réalisation particulier, le dispositif noeud maître détermine le gain ou la perte $\delta_{c \rightarrow t}(k)$, pour chaque dispositif noeud $k,$ de basculer du premier canal de communication $c$ vers un second canal de communication cible $t$ de la façon suivante :

$$\delta_{c \rightarrow t}(k) = s_t(k) - s_c(k)$$

où $s_t(k)$ est le score pour le premier canal de communication $c$ et $s_t(k)$ est le score pour le second canal de communication cible $t$.

Selon un mode de réalisation particulier, le dispositif noeud maître estime le gain ou la perte à utiliser le second canal de communication cible $t$ à la place du premier canal de communication $c$ pour l'ensemble du réseau d'acheminement, grâce à une fonction de coût comme suit :

$$\Delta_{c \rightarrow t} = \sum_{k} \gamma_k \, \delta_{c \rightarrow t}(k) = \sum_{k} \gamma_k \big( s_t(k) - s_c(k) \big)$$

où $\gamma_k$ sont des coefficients de pondérations définis afin de prendre en compte le type de trafic en cours sur le premier canal de communication $c,$ tel que rapporté par chaque dispositif noeud $k$ du réseau d'acheminement. Ainsi, il est possible d'aisément prioriser la sélection du canal de communication approprié en fonction du trafic concerné.

Selon un mode de réalisation particulier, lorsque le dispositif noeud maître a décidé de changer ou pas de canal de communication pour le réseau d'acheminement, le dispositif noeud ayant initié l'évaluation de changement de canal de communication déclenche une temporisation, pendant laquelle il n'est pas autorisé à initier une nouvelle évaluation de changement de canal de communication. Ainsi, les demandes intempestives de changement de canal de communication sont évitées.

Selon un mode réalisation particulier, le dispositif noeud maître effectue les étapes suivantes : échanger avec les autres dispositifs noeuds du réseau d'acheminement pour récolter des informations sur les capacités de mesurer telle ou telle métrique ; sélectionner les métriques applicables pour les calculs de scores en fonction desdites informations ; informer les autres dispositifs noeuds du réseau d'acheminement sur les métriques à utiliser pour les calculs de scores. Ainsi, les métriques à utiliser peuvent être dynamiquement définies.

Selon un mode de réalisation particulier, le réseau frontal et le réseau d'acheminement utilisent des interfaces radio de type Wi-Fi.

Il est également proposé un second procédé pour sélectionner un canal de communication dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil. Un même premier canal de communication, sélectionné par un dispositif noeud maître du réseau d'acheminement, est utilisé dans le réseau d'acheminement pour interconnecter lesdits dispositifs noeuds. Le procédé comporte les étapes suivantes effectuées par un dispositif noeud du réseau d'acheminement autre que le dispositif noeud maître : effectuer une évaluation de conditions de transmission de son environnement radio ; calculer, pour chaque canal de communication à disposition dudit dispositif noeud, un score représentatif d'une qualité de transmission via ledit canal de communication d'après l'évaluation effectuée ; lorsqu'au moins un second canal de communication montre un meilleur score que le premier canal de communication, initier auprès dudit dispositif noeud maître une évaluation de changement de canal de communication au profit d'un dit second canal de communication ; attendre une décision du dispositif noeud maître de changer, ou pas, de canal de communication utilisé dans le réseau d'acheminement.

Il est également proposé un troisième procédé pour sélectionner un canal de communication dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil. Un même premier canal de communication, sélectionné par un dispositif noeud maître du réseau d'acheminement, est utilisé dans le réseau d'acheminement pour interconnecter lesdits dispositifs noeuds. Le procédé comporte les étapes suivantes effectuées par le dispositif noeud maître : effectuer une évaluation de conditions de transmission de son environnement radio ; calculer, pour chaque canal de communication à disposition dudit dispositif noeud maître, un score représentatif d'une qualité de transmission via ledit canal de communication d'après l'évaluation effectuée. De plus, lorsque, du point de vue du dispositif noeud maître ou d'un autre dispositif noeud du réseau d'acheminement, au moins un second canal de communication montre un meilleur score que le premier canal de communication, le troisième procédé comporte en outre les étapes suivantes effectuées par le dispositif noeud maître : obtenir, de chaque autre dispositif noeud du réseau d'acheminement, le score du premier canal de communication et le score d'au moins un dit second canal de communication, pour effectuer une évaluation de changement de canal de communication ; décider de changer, ou pas, de canal de communication utilisé dans le réseau d'acheminement en fonction des scores obtenus.

Il est également proposé un produit programme d'ordinateur comportant des instructions pour implémenter, par un processeur, le second procédé ou le troisième procédé, lorsque ledit programme est exécuté par ledit processeur. Il est également proposé un support de stockage d'informations stockant un tel produit programme d'ordinateur.

Il est également proposé un dispositif noeud destiné à être utilisé dans un réseau de communication sans-fil comportant un réseau d'acheminement interconnectant ledit dispositif noeud avec d'autres dispositifs noeuds et destiné à étendre une couverture radio d'un réseau frontal sans-fil par mise en oeuvre d'une pluralité de points d'accès du réseau frontal sans-fil. Un même premier canal de communication, sélectionné par un dispositif noeud maître du réseau d'acheminement, est utilisé dans le réseau d'acheminement pour interconnecter lesdits dispositifs noeuds. Le dispositif noeud en question comporte : des moyens pour effectuer une évaluation de conditions de transmission de son environnement radio ; des moyens pour calculer, pour chaque canal de communication à disposition dudit dispositif noeud, un score représentatif d'une qualité de transmission via ledit canal de communication d'après l'évaluation effectuée ; lorsqu'au moins un second canal de communication montre un meilleur score que le premier canal de communication, des moyens pour initier auprès dudit dispositif noeud maître une évaluation de changement de canal de communication au profit d'un dit second canal de communication ; des moyens pour attendre une décision du dispositif noeud maître de changer, ou pas, de canal de communication utilisé dans le réseau d'acheminement.

Il est également proposé un dispositif noeud maître destiné à être utilisé dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil. Un même canal de communication, sélectionné par le dispositif noeud maître, est utilisé dans le réseau d'acheminement pour interconnecter lesdits dispositifs noeuds. Le dispositif noeud maître comporte : des moyens pour effectuer une évaluation de conditions de transmission de son environnement radio ; des moyens pour calculer, pour chaque canal de communication à disposition dudit dispositif noeud maître, un score représentatif d'une qualité de transmission via ledit canal de communication d'après l'évaluation effectuée. De plus, lorsque, du point de vue du dispositif noeud maître ou d'un autre dispositif noeud du réseau d'acheminement, au moins un second canal de communication montre un meilleur score que le premier canal de communication, le dispositif noeud maître comporte en outre : des moyens pour obtenir, de chaque autre dispositif noeud du réseau d'acheminement, le score du premier canal de communication et le score d'au moins un dit second canal de communication, pour effectuer une évaluation de changement de canal de communication ; des moyens pour décider de changer, ou pas, de canal de communication utilisé dans le réseau d'acheminement en fonction des scores obtenus.

Selon un mode de réalisation particulier, le dispositif noeud maître est une passerelle résidentielle.

Il est également proposé un réseau de communication sans-fil comportant un réseau d'acheminement interconnectant un dispositif noeud maître et des dispositifs noeuds tels qu'évoqués ci-dessus, pour étendre une couverture radio d'un réseau frontal sans-fil par mise en oeuvre d'une pluralité de points d'accès du réseau frontal sans-fil.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un agencement de réseau de communication sans-fil, dans lequel la présente invention peut être implémentée ;

[Fig. 2] illustre schématiquement un exemple d'agencement matériel d'un dispositif noeud utilisable dans le cadre du réseau de communication sans-fil de la Fig. 1 ;

[Fig. 3A] illustre schématiquement un premier exemple d'échanges dans le cadre d'une sélection de canal de communication dans le réseau de communication sans-fil de la Fig. 1 ;

[Fig. 3B] illustre schématiquement un second exemple d'échanges dans le cadre d'une sélection de canal de communication dans le réseau de communication sans-fil de la Fig. 1 ; et

[Fig. 4] illustre schématiquement un troisième exemple d' échanges dans le cadre d'une sélection de canal de communication dans le réseau de communication sans-fil de la Fig. 1.

EXPOSE DETAILLE DE MODES DE REALISATION

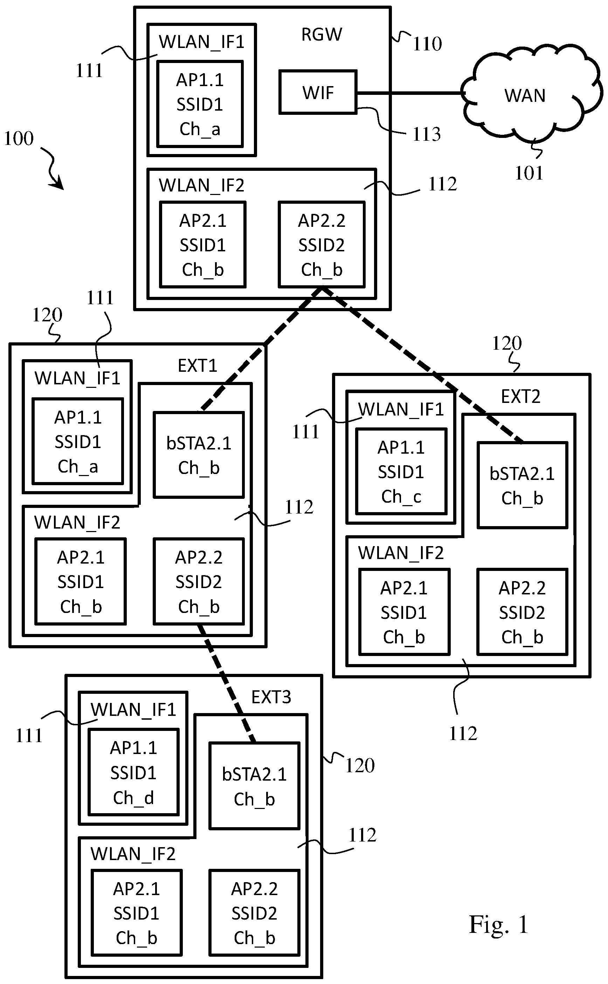

La Fig. 1 illustre schématiquement un agencement de réseau de communication sans-fil, dans lequel la présente invention peut être implémentée. De manière préférentielle, le réseau de communication sans-fil est un réseau local sans-fil WLAN 100. Le réseau local sans-fil WLAN forme un système d'extension de couverture radio construit autour d'un réseau d'acheminement (« backhaul network » en anglais, comme déjà indiqué) comportant un ensemble de dispositifs noeuds. Dans l'agencement illustratif de la Fig. 1, un premier dispositif noeud est inclus dans une passerelle résidentielle RGW 110 et un ensemble de seconds dispositifs noeuds sont inclus dans des extendeurs EXT1, EXT2, EXT3 120. L'ensemble des extendeurs EXT1, EXT2, EXT3 120 permet d'étendre la couverture radio du réseau local sans-fil WLAN 100 par rapport à la seule mise en place de la passerelle résidentielle RGW 110. Dans un mode de réalisation, la passerelle résidentielle RGW 110 et les extendeurs EXT1, EXT2, EXT3 sont arrangés pour réaliser un réseau local sans-fil WLAN maillé (« mesh » en anglais).

La passerelle résidentielle RGW 110 comporte une interface de connexion WIF 113 conçue pour connecter la passerelle résidentielle RGW 110 à un réseau étendu WAN 101, tel que l'Internet. L'interface de connexion WIF 113 est par exemple une interface de type ADSL (« Asynchronous Digital Subscriber Line » en anglais), de type VDSL (« Very-high-bit-rate Digital Subscriber Line » en anglais) ou de type FTTH (« Fiber To The Home » en anglais).

La passerelle résidentielle RGW 110 joue le rôle de dispositif noeud maître dans le réseau d'acheminement, mais tout autre dispositif noeud du réseau d'acheminement peut en variante jouer le rôle de dispositif noeud maître. Comme détaillé par la suite, le dispositif noeud maître choisit le canal de communication à utiliser dans le réseau d'acheminement.

La passerelle résidentielle RGW 110 dispose d'une première interface radio WLAN_IF1 111 embarquant un point d'accès AP1.1 faisant partie d'une mise en place d'un réseau frontal (« fronthaul network » en anglais, comme déjà indiqué) identifié par un identifiant SSID1 et utilisant un canal de communication Ch_a. La passerelle résidentielle RGW 110 dispose d'une seconde interface radio WLAN_IF2 112 embarquant un point d'accès AP2.1 et un point d'accès AP2.2. Le point d'accès AP2.1 de la seconde interface radio WLAN_IF2 112 de la passerelle résidentielle RGW 110 fait partie de la mise en place du réseau frontal identifié par l'identifiant SSID1, et utilise un canal de communication Ch_b. Le point d'accès AP2.2 de la seconde interface radio WLAN_IF2 112 de la passerelle résidentielle RGW 110 fait partie de la mise en place du réseau d'acheminement, identifié par un identifiant SSID2, et utilise aussi le canal de communication Ch_b. Les points d'accès AP2.1 et AP2.2 utilisent le même canal de communication Ch_b puisqu'ils sont tous deux embarqués dans la même interface radio WLAN_IF2 112 de la passerelle résidentielle RGW 110.

L'extendeur EXT1 120 dispose d'une première interface radio WLAN_IF1 111 embarquant un point d'accès AP1.1 faisant partie de la mise en place du réseau frontal identifié par l'identifiant SSID1 utilisant le canal de communication Ch_a. L'extendeur EXT1 120 dispose d'une seconde interface radio WLAN_IF2 112 embarquant une fonctionnalité de station bSTA2.1 connectée via le canal de communication Ch_b au point d'accès AP2.2 de la seconde interface radio WLAN_IF2 112 de la passerelle résidentielle RGW 110 pour la mise en place du réseau d'acheminement. La seconde interface radio WLAN_IF2 112 de l'extendeur EXT1 120 embarque également un point d'accès AP2.1 et un point d'accès AP2.2. Le point d'accès AP2.1 de la seconde interface radio WLAN_IF2 112 de l'extendeur EXT1 120 fait partie de la mise en place du réseau frontal identifié par l'identifiant SSID1, et utilise le canal de communication Ch_b. Le point d'accès AP2.2 de la seconde interface radio WLAN_IF2 112 de l'extendeur EXT1 120 fait aussi partie de la mise en place du réseau d'acheminement, identifié par l'identifiant SSID2, et utilise aussi le canal de communication Ch_b. La station bSTA2.1 et les points d'accès AP2.1 et AP2.2 utilisent le même canal de communication Ch_b puisqu'ils sont tous trois embarqués dans la même interface radio WLAN_IF2 112 de l'extendeur EXT1 120.

L'extendeur EXT2 120 dispose d'une première interface radio WLAN_IF1 111 embarquant un point d'accès AP1.1 faisant partie de la mise en place du réseau frontal identifié par l'identifiant SSID1 utilisant un canal de communication Ch_c. L'extendeur EXT2 120 dispose d'une seconde interface radio WLAN_IF2 112 embarquant une fonctionnalité de station bSTA2.1 connectée via le canal de communication Ch_b au point d'accès AP2.2 de la seconde interface radio WLAN_IF2 112 de la passerelle résidentielle RGW 110 pour la mise en place du réseau d'acheminement. La seconde interface radio WLAN_IF2 112 de l'extendeur EXT2 120 embarque également un point d'accès AP2.1 et un point d'accès AP2.2. Le point d'accès AP2.1 de la seconde interface radio WLAN_IF2 112 de l'extendeur EXT2 120 fait partie de la mise en place du réseau frontal identifié par l'identifiant SSID1, et utilise le canal de communication Ch_b. Le point d'accès AP2.2 de la seconde interface radio WLAN_IF2 112 de l'extendeur EXT2 120 fait aussi partie de la mise en place du réseau d'acheminement, identifié par l'identifiant SSID2, et utilise aussi le canal de communication Ch_b. La station bSTA2.1 et les points d'accès AP2.1 et AP2.2 utilisent le même canal de communication Ch_b car ils sont tous trois embarqués dans la même interface radio WLAN_IF2 112 de l'extendeur EXT2 120.

L'extendeur EXT3 120 dispose d'une première interface radio WLAN_IF1 111 embarquant un point d'accès AP1.1 faisant partie de la mise en place du réseau frontal identifié par l'identifiant SSID1 utilisant un canal de communication Ch_d. L'extendeur EXT3 120 dispose d'une seconde interface radio WLAN_IF2 112 embarquant une fonctionnalité de station bSTA2.1 connectée via le canal de communication Ch_b au point d'accès AP2.2 de la seconde interface radio WLAN_IF2 112 de l'extendeur EXT1 120 pour la mise en place du réseau d'acheminement. La seconde interface radio WLAN_IF2 112 de l'extendeur EXT3 120 embarque également un point d'accès AP2.1 et un point d'accès AP2.2. Le point d'accès AP2.1 de la seconde interface radio WLAN_IF2 112 de l'extendeur EXT3 120 fait partie de la mise en place du réseau frontal identifié par l'identifiant SSID1, et utilise le canal de communication Ch_b. Le point d'accès AP2.2 de la seconde interface radio WLAN_IF2 112 de l'extendeur EXT3 120 fait aussi partie de la mise en place du réseau d'acheminement, identifié par l'identifiant SSID2, et utilise aussi le canal de communication Ch_b. La station bSTA2.1 et les points d'accès AP2.1 et AP2.2 utilisent le même canal de communication Ch_b car ils sont tous trois embarqués dans la même interface radio WLAN_IF2 112 de l'extendeur EXT3 120.

Les interfaces radio WLAN_IF1 111 sont par exemple de type Wi-Fi (marque déposée) opérant dans la bande à 2,4 GHz et les interfaces radio WLAN_IF2 112 sont par exemple de type Wi-Fi (marque déposée) opérant dans la bande à 5 GHz. Dans certains modes de réalisation les interfaces radio WLAN_IF1 111 et WLAN_IF2 112 sont respectivement compatibles avec certains amendements de la famille des standards IEEE 802.11. Ces amendements sont par exemple, et de manière non limitative, IEEE 802.11n, IEEE 802.11ac, IEEE 802.11ax, IEEE 802.1 1be.

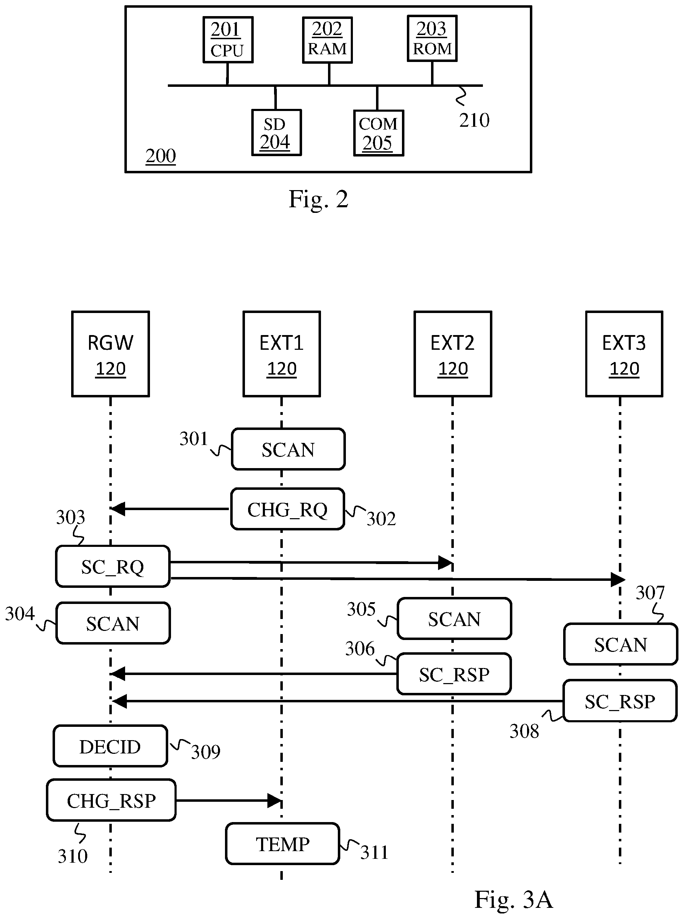

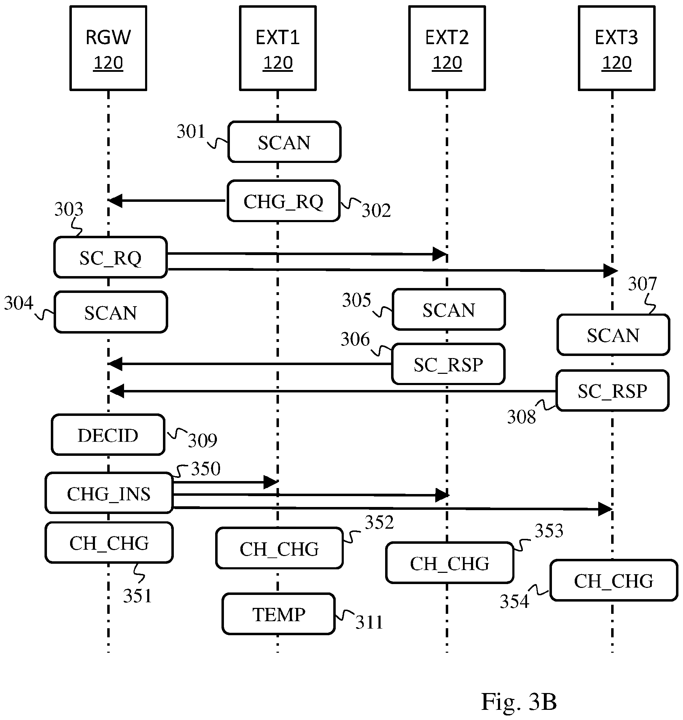

Le choix du canal de communication Ch_b pour supporter le réseau d'acheminement est fait par le dispositif noeud maître. Ce choix est alors imposé à tous les points d'accès AP embarqués dans les interfaces radio WLAN_IF2 112, comme déjà expliqué. Le dispositif noeud maître adapte ce choix en fonction d'échanges avec les autres dispositifs noeuds du réseau d'acheminement, tel qu'expliqué ci-après en relation avec les Figs. 3A et 3B.

La **Fig. 2** illustre schématiquement un exemple d'agencement matériel d'un dispositif noeud 200 utilisable dans le cadre du réseau local sans-fil WLAN 100. Le premier dispositif noeud peut être réalisé selon l'exemple d'agencement de la Fig. 2. Chacun des seconds dispositifs noeuds peut être réalisé selon l'exemple d'agencement de la Fig. 2.

Le dispositif noeud 200 comporte, reliés par un bus de communication 210 : un processeur CPU 201 ; une mémoire vive RAM (« Random Access Memory » en anglais) 202 ; une mémoire morte ROM (« Read Only Memory » en anglais) 203 ou une mémoire Flash ; une unité de stockage ou un lecteur de support de stockage, tel qu'un lecteur de cartes SD (« Secure Digital » en anglais) 204 ou un disque dur HDD (« Hard Disk Drive » en anglais) ; et au moins une interface de communication COM 205 (e.g., comme illustré sur la Fig. 1) qui inclut les interfaces radio susmentionnées.

Le processeur CPU 201 est capable d'exécuter des instructions chargées dans la mémoire RAM 202 à partir de la mémoire ROM 203 ou de la mémoire Flash, d'une mémoire externe (telle qu'une carte SD), d'un support de stockage (tel que le disque dur HDD), ou d'un réseau de communication. Lors de la mise sous tension du dispositif noeud 200, le processeur CPU 201 est capable de lire de la mémoire RAM 202 des instructions et de les exécuter. Ces instructions forment un programme d'ordinateur causant l'exécution, par le processeur CPU 201, de tout ou partie des comportements, algorithmes et étapes décrits ici.

Ainsi, tout ou partie des comportements, algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des comportements, algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le dispositif noeud 200 comporte de la circuiterie électronique adaptée et configurée pour implémenter les comportements, algorithmes et étapes décrits ici.

La **Fig. 3A** illustre schématiquement un exemple d'échanges dans le cadre d'une sélection de canal de communication dans le réseau local sans-fil WLAN 100. Plus particulièrement, les échanges de la Fig. 3A s'opèrent dans le cadre d'une sélection de canal de communication à utiliser pour supporter le réseau d'acheminement, lorsqu'un dispositif noeud du réseau d'acheminement autre que le dispositif noeud maître évalue qu'un autre canal de communication serait, de son point de vue, plus adapté pour supporter le réseau d'acheminement et/ou un réseau frontal opérant sur le même canal que ledit réseau d'acheminement au vu des conditions de transmission (émission et/ou réception) de son environnement radio.

Avant les échanges de la Fig. 3A, un canal de communication a été sélectionné par le dispositif noeud maître. Ce canal de communication peut avoir été préconfiguré, par exemple en usine, au sein du dispositif noeud maître, ou sélectionné au démarrage du dispositif noeud maître.

En s'appuyant sur l'illustration de la Fig. 1, lorsque le point d'accès AP2.2 de la passerelle résidentielle RGW 110

EP 3 917 233 B1

est activé, le canal de communication Ch_b est utilisé pour mettre en place le réseau d'acheminement identifié par l'identifiant SSID2. La fonctionnalité de station bSTA2.1 de l'extendeur EXT1 120, qui est à portée radio de la passerelle résidentielle RGW 110, reconnaît l'identifiant SSID2 diffusé dans les balises émises par le point d'accès AP2.2 de la passerelle résidentielle RGW 110 et se connecte au point d'accès AP2.2 de la passerelle résidentielle RGW 110 via le canal de communication Ch_b. De même pour la fonctionnalité de station bSTA2.1 de l'extendeur EXT2 120. Après échanges des informations nécessaires à la mise en place du réseau d'acheminement (telles que l'identifiant SSID2 et de potentielles données de sécurité), les points d'accès AP2.2 des extendeurs EXT1 et EXT2 120 sont activés, ce qui permet à la fonctionnalité de station bSTA2.1 de l'extendeur EXT3 120, qui est à portée radio de l'extendeur EXT1 120, de se connecter au point d'accès AP2.2 de l'extendeur EXT1 120 via le canal de communication Ch_b. Considérons à titre illustratif que le canal de communication Ch_b est le canal de communication « 36 ».

Les dispositifs noeuds du réseau d'acheminement effectuent régulièrement des évaluations des conditions de transmission (émission et/ou réception) de leur environnement radio. Ainsi, dans une étape 301, l'extendeur EXT1 120 effectue préférentiellement un scan de son environnement radio. Ce scan comporte des opérations de balayage de différents canaux de communication à disposition de l'interface radio WLAN_IF2 112 et d'évaluation de qualité de transmission via ces différents canaux de communication grâce à une ou plusieurs métriques prédéfinies. De telles métriques sont par exemple un niveau de bruit ambiant perceptible sur le canal de communication en question, une quantité de points d'accès AP qui n'appartiennent pas au réseau d'acheminement et qui sont détectés via leurs balises émises comme utilisant le canal de communication en question, un taux d'inoccupation ou d'occupation du canal de communication en question. D'autres métriques peuvent être utilisées en ce qui concerne le canal de communication actuellement utilisé (Ch_b dans notre exemple), comme par exemple un taux d'erreurs de transmission ou un taux de retransmissions. Un historique d'événements relatifs à ces métriques peut être construit, avec horodatage et gestion de durée de pertinence desdits événements, afin d'enrichir ou d'affiner ces métriques. Encore d'autres métriques peuvent être utilisées, comme la quantité de points d'accès AP (hors points d'accès AP du réseau d'acheminement) utilisant un canal de communication adjacent au canal de communication considéré, afin de prendre en compte des possibilités d'agrégations, ou encore la quantité de points d'accès AP (hors points d'accès AP du réseau d'acheminement) détectés avec une puissance supérieure à un seuil prédéterminé, afin d'estimer la quantité de points d'accès AP voisins très proches (et donc affectant plus les transmissions que les autres).

A l'issue de ces évaluations de conditions de transmission de leur environnement radio, le dispositif noeud en question construit un descripteur, par exemple une liste ou une table, où chaque canal de communication est associé avec un score représentatif d'une qualité de transmission via le canal de communication en question. Une information d'horodatage, i.e., indiquant quand ce canal de communication a été évalué, y est préférentiellement adjointe. Par exemple, plus le score est élevé, plus le canal de communication est jugé adéquat.

Le score $S_i$ attribué à chaque canal de communication $i$ peut être une somme pondérée de notes $n_{i,j}$ attribuées aux différentes métriques $j$ par l'évaluations de conditions de transmission via ledit canal de communication $i$, les notes $n_{i,j}$ ayant la même amplitude possible (e.g., de 0 à 100), en utilisant des poids prédéterminés $\alpha_{i,j}$ servant à privilégier une métrique plutôt qu'une autre pour le canal de communication $i$ en question, de sorte que :

$$S_i = \sum_j \alpha_{i,j} . n_{i,j}$$

avec

$$\forall i, \forall j, \sum_j \alpha_{i,j} = 1$$

Il est aussi possible d'appliquer des poids prédéfinis $\alpha_j$ à chaque métrique, indépendamment du canal de communication $i$ évalué, ce qui donne :

$$S_i = \sum_j \alpha_j . n_{i,j}$$

avec

$$\forall j, \sum_j \alpha_j = 1$$

Dans un mode de réalisation particulier, lorsqu'une métrique n'est pas observable pour un canal de communication *i*, le dispositif noeud en question peut lui attribuer la note maximale, ou sortir la métrique en question du calcul de score sans ajuster les poids des autres métriques, ou sortir la métrique en question du calcul de score en ajustant proportionnellement les poids des autres métriques pour assurer que leur somme soit égale à 1.

Par exemple, les métriques suivantes peuvent être considérées (avec leur notation de 0 à 5) :

Table 1

| Niveau bruit ambiant mesuré en dBm $\mu$ | Note |
|---|---|
| $-65dBm \leq \mu$ | 0 |
| $-70dBm \leq \mu < -65dBm$ | 1 |
| $-75dBm \leq \mu < -70dBm$ | 2 |
| $-80dBm \leq \mu < -75dBm$ | 3 |
| $-85dBm \leq \mu < -80dBm$ | 4 |
| $\mu < -85dBm$ | 5 |

Table 2

| Quantité de points d'accès AP détectés *v* (hors points d'accès du réseau d'acheminement) | Note |
|---|---|
| $15 < v$ | 0 |
| $12 \leq v < 15$ | 1 |
| $9 \leq v < 12$ | 2 |
| $6 \leq v < 9$ | 3 |
| $3 \leq v < 6$ | 4 |
| $v < 3$ | 5 |

Table 3

| Proportion du temps où le canal de communication est vu comme libre, en pourcentage *TXOP* | Note |
|---|---|
| $TXOP < 5$ | 0 |
| $5 \leq TXOP < 25$ | 1 |
| $25 \leq \mu < 45$ | 2 |
| $45 \leq v < 65$ | 3 |
| $65 \leq v < 85$ | 4 |
| $85 < TXOP$ | 5 |

Table 4

| Taux de paquets retransmis pour 100 paquets transmis en pourcentage $r_{tx}$ | Note |
|---|---|
| $30 < r_{tx}$ | 0 |
| $25 \leq r_{tx} < 30$ | 1 |
| $20 \leq r_{tx} < 25$ | 2 |
| $15 \leq r_{tx} < 20$ | 3 |
| $10 \leq r_{tx} < 15$ | 4 |

(suite)

| Taux de paquets retransmis pour 100 paquets transmis en pourcentage $r_{tx}$ | Note |
|---|---|
| $r_{tx} < 10$ | 5 |

En considérant, toujours à titre illustratif, les valeurs suivantes des métriques observées sur les canaux de communication « 36 », « 48 », « 100 » (qui ne sont pas des références numériques des dessins annexés), le canal de communication « 36 » étant, au moment où l'évaluations de conditions de transmission est effectuée, le canal de communication Ch_b configuré pour l'interface radio WLAN_IF2 112 considérée :

Table 5

| Canal de communication | $\mu$ | $v$ | *TXOP* | $r_{tx}$ |
|---|---|---|---|---|
| 36 | -88 dBm | 16 | 40% | 33% |
| 48 | -90 dBm | 1 | 2% | |
| 100 | -84 dBm | 4 | 80% | |

Alors, si le même poids est attribué à ces métriques pour tous les canaux de communication ($\forall i$, $\forall j$, $\alpha_{i,j} = 0.25$), et qu'une note maximale est attribuée à une métrique non connue, alors les notes et scores suivants sont obtenus :

Table 6

| Canal de communication | $note(\mu)$ | $note(v)$ | $note(TXOP)$ | $note(r_{tx})$ | score $s_i$ |
|---|---|---|---|---|---|
| 36 | 5 | 0 | 2 | 0 | 1,75 |
| 48 | 5 | 5 | 0 | 5 | 3,75 |
| 100 | 4 | 4 | 4 | 5 | 4,25 |

Sur la Fig. 3A, dans une étape 301, l'extendeur EXT1 120 effectue l'évaluation de conditions de transmission (e.g., opération de scan) susmentionnée et calcule le score $S_i$ attribué à chaque canal de communication $i$ à disposition de son interface radio WLAN_IF2 112. Si le canal de communication « 36 » montre un score supérieur ou égal à celui de chacun des autres canaux de communication, l'extendeur EXT1 120 attend de devoir réitérer les évaluations de conditions de transmission (e.g., opération de scan). Entretemps, l'extendeur EXT1 120 tient à jour les éventuelles informations nécessaires aux métriques utilisées pour le calcul de score $S_i$ (taux de paquets retransmis sur le canal de communication « 36 »...). Considérons que, comme illustré dans les tables ci-dessus, le canal de communication « 36 » montre un score inférieur à celui d'au moins un autre canal de communication, ici le canal de communication « 100 ». Alors, dans une étape 302, l'extendeur EXT1 120 transmet à la passerelle résidentielle RGW 110, en tant que dispositif noeud maître, un message CHG_REQ requérant le changement du canal de communication utilisé par le réseau d'acheminement. Ainsi, l'extendeur EXT1 120 ne décide pas de lui-même de changer la configuration des points d'accès AP de son interface radio WLAN_IF2 112 pour utiliser un meilleur canal de communication. Il en réfère au dispositif noeud maître.

Le message CHG_REQ inclut au minimum une information indiquant quel canal de communication a le meilleur score (canal de communication cible) pour l'extendeur EXT1 120, quel est son score, et quel est le score du canal de communication actuellement utilisé. Eventuellement, le message CHG_REQ inclut une information d'horodatage, indiquant quand chaque canal de communication a été évalué. Dans un mode de réalisation préférentiel, le message CHG_REQ liste tous les canaux de communication qui ont obtenu un meilleur score que le canal de communication actuellement utilisé, ainsi que leurs scores respectifs, et ne donne pas le score obtenu par chacun des canaux de communication pour lequel ce score est moins bon que celui du canal de communication actuellement utilisé.

Optionnellement, le message CHG_REQ inclut des informations sur le type de trafic en cours pour chaque canal de communication indiqué et sur la qualité de service qui lui est associée. Par exemple, une implémentation possible est un champ de bits (« bitmap » en anglais) où chaque bit est associé à une qualité de service (type Au Mieux (« Best Effort » en anglais, BE) / Arrière-Plan (« Background » en anglais, BK) / Vidéo (VI) / Voix (VO)) et est mis à 1 si du trafic associé à cette qualité de service a eu récemment lieu (dans une fenêtre d'observation prédéterminée, dont la durée d'observation peut être également indiquée dans le message CHG_REQ) et/ou est en cours, ou à 0 sinon. Au lieu d'un bit par qualité de service, le message CHG_REQ peut inclure un compteur incrémenté à chaque ouverture de flux associé à cette qualité de service et décrémenté à chaque fermeture de flux associé à cette qualité de service ou à chaque négociation d'acquittement de groupe (« Block Ack agreement » dans la terminologie de la famille de standards IEEE 802.11) pour cette qualité de service.

Suite à l'envoi du message CHG_REQ, l'extendeur EXT1 120 attend une décision du dispositif noeud maître de changer, ou pas, de canal de communication utilisé dans le réseau d'acheminement (et par conséquent sur le réseau frontal opéré par la même interface radio).

Dans une étape 303, la passerelle résidentielle RGW 110 sonde les autres dispositifs noeuds pour déterminer si un changement de canal de communication serait approprié. Pour ce faire, la passerelle résidentielle RGW 110 leur transmet un message SC_RQ. Le message SC_RQ instruit chaque dispositif noeud le recevant d'effectuer des évaluations de conditions de transmission de son environnement radio et de retourner le score des canaux de communication concernés. Dans un mode de réalisation particulier, le message SC_RG identifie chaque canal de communication indiqué dans le message CHG_REQ. Les évaluations de conditions de transmission se limitent ainsi aux canaux de communication qui peuvent apporter un bénéfice à l'extendeur EXT1 120 et au canal de communication actuellement utilisé. Dans un autre mode de réalisation particulier, chaque dispositif noeud recevant le message SC_RG doit effectuer des évaluations de conditions de transmission pour tous les canaux de communication dont dispose son interface radio WLAN_IF2 112. Dans encore un autre mode de réalisation particulier, si le dispositif noeud recevant le message SC_RQ a déjà effectué des évaluations de conditions de transmission pour chacun des canaux de communication indiqués dans le message SC_RQ à un instant t0 antérieur à l'instant t1 de réception du message SC_RQ et si la différence t1 - t0 est inférieure à un seuil $\Delta T$ préférentiellement inclus dans le message SC RQ, alors le dispositif noeud en question retourne le score des canaux de communication concernés sans avoir à réévaluer le conditions de transmission via lesdits canaux de communication.

Dans une étape 304, la passerelle résidentielle RGW 110 effectue elle-aussi les évaluations de conditions de transmission (e.g., opération de scan) de son environnement radio et effectue les calculs de scores correspondants. Les extendeurs EXT2 et EXT3 120 font de même dans des étapes respectives 305 et 307. Dans des étapes 306 et 308, les extendeurs EXT2 et EXT3 120 transmettent respectivement à la passerelle résidentielle RGW 110 des réponses SC_RSP incluant les scores pour les canaux de communication concernés. Les réponses SC_RSP incluent préférentiellement les mêmes informations vis-à-vis desdits canaux de communication que le message CHG_REQ (mais du point de vue des extendeurs EXT2 et EXT3 120).

Si le canal de communication c est le canal de communication actuellement utilisé (canal de communication courant) et le canal de communication t est le canal de communication cible, alors le dispositif noeud maître dispose, au moins, pour chaque dispositif noeud $k$, du score $s_c(k)$ pour le canal de communication c et du score $s_t(k)$ pour le canal de communication t.

Le dispositif noeud maître détermine le gain ou la perte pour tous les dispositifs noeuds $k$ à passer du canal de communication c au canal de communication $t$ de la façon suivante :

$$\delta_{c \to t}(k) = s_t(k) - s_c(k)$$

Si $\delta_{c \to t}(k)$ est positif, alors il est avantageux pour le dispositif noeud $k$ de changer de canal de communication utilisé dans interface radio WLAN_IF2 112. Au contraire, si $\delta_{c \to t}(k)$ est négatif, alors il est désavantageux pour le dispositif noeud $k$ de changer de canal de communication utilisé dans interface radio WLAN_IF2 112.

Dès lors, le dispositif noeud maître estime le gain à utiliser le canal de communication t à la place du canal de communication c pour l'ensemble du réseau d'acheminement. Par exemple, la fonction de coût suivante peut être évaluée :

$$\Delta_{c \to t} = \sum_k \gamma_k \, \delta_{c \to t}(k) = \sum_k \gamma_k \big( s_t(k) - s_c(k) \big)$$

où des coefficients de pondérations $\gamma_k$ sont définis afin de prendre en compte le type de trafic en cours sur le canal de communication c, tel que rapporté par chaque dispositif noeud $k$. Par exemple : si pas de trafic $\gamma_k$=0, si trafic BK $\gamma_k$=1, si trafic BE $\gamma_k$=2, si trafic VI $\gamma_k$=3, et si trafic VO $\gamma_k$=4.

D'autres fonctions de coût peuvent bien sûr être appliquée, par exemple en excluant le dispositif noeud ayant transmis le message CHG_REQ de son calcul.

Si la fonction de coût $\Delta_{c \to t}$ est négative, alors basculer sur le canal de communication t à la place du canal de communication c ne bénéficierait pas au réseau d'acheminement.

Auquel cas, dans une étape 309, le dispositif noeud maître prend la décision de ne pas faire droit à la requête de changement de canal de communication. Dans une étape 310, la passerelle résidentielle RGW 110 transmet alors à l'extendeur EXT1 120 un message CHG_RSP représentatif d'une réponse négative au message CHG_RQ.

Optionnellement, dans une étape 311, l'extendeur EXT1 120 déclenche une temporisation, pendant laquelle l'extendeur EXT1 120 n'est pas autorisé à transmettre à nouveau un message CHG_RQ au dispositif noeud maître.

L'extendeur EXT1 120 est ainsi empêché de faire une nouvelle demande de changement de canal de communication jusqu'à expiration de la temporisation. La temporisation peut avoir une durée prédéfinie ou une durée fixée par le dispositif noeud maître dans le message CHG_RSP. Le dispositif noeud maître peut en outre indiquer dans le message CHG_RSP s'il instruit l'extendeur EXT1 120 de déclencher, ou pas, ladite temporisation.

A noter que la fonction de coût $\Delta_{c \to t}$ peut être appliquée pour chaque canal de communication indiqué dans le message CHG_RQ comme ayant obtenu, de la part de l'extendeur EXT1 120, un meilleur score que le canal de communication c. Si le dispositif noeud maître ne dispose pas des scores correspondant à un autre canal de communication cible à vérifier (parce que cet autre canal de communication cible n'était pas concerné par les messages SC_RQ transmis à l'étape 303), le dispositif noeud maître réitère des envois de messages SC_RQ au moins pour cet autre canal de communication cible. Le dispositif noeud maître peut procéder ainsi jusqu'à trouver, ou pas, un canal de communication cible qui donne un résultat positif de la fonction de coût $\Delta_{c \to t}$. Si le dispositif noeud maître ne parvient pas à trouver un canal de communication cible parmi ceux qui ont été listés dans le message CHG_RQ qui donne un résultat positif de la fonction de coût $\Delta_{c \to t}$, alors le dispositif noeud maître prend la décision de ne pas faire droit à la requête de changement de canal de communication et transmet à l'extendeur EXT1 120 un message CHG_RSP représentatif d'une réponse négative au message CHG_RQ, comme montré sur la Fig. 3A.

Contrairement aux échanges de la Fig. 3A, les échanges de la **Fig. 3B** présentent un scénario dans lequel le dispositif noeud maître décide de changer de canal de communication destiné à supporter le réseau d'acheminement. La Fig. 3B reprend les étapes 301 à 308 telles décrites ci-dessus. A l'étape 309, le dispositif noeud maître a déterminé que le canal de communication cible t indiqué dans le message CHG_RQ bénéficierait au réseau d'acheminement (ou l'un des canaux de communication cibles indiqués dans le message CHG_RQ) en remplacement du canal de communication c. Alors, le dispositif noeud maître prend la décision de faire droit à la requête de changement de canal de communication. Dans une étape 350, la passerelle résidentielle RGW 110 transmet alors à chaque autre dispositif noeud du réseau d'acheminement un message CHG_INS instruisant de changer de changer de canal de communication et de basculer sur le canal de communication cible que ledit dispositif noeud maître a retenu. Dans une étape 351, la passerelle résidentielle RGW 110 configure son interface radio WLAN_IF2 112 pour communiquer via ledit canal de communication cible retenu à la place du canal de communication c. Les extendeurs EXT1, EXT2 et EXT3 120 font de même dans des étapes respectives 352, 353 et 354.

Préalablement à la transmission du message CHG_INS, le dispositif noeud maître peut transmettre à l'extendeur EXT1 120 un message CHG_RSP représentatif d'une réponse positive au message CHG_RQ. L'étape 311 est optionnellement effectuée par l'extendeur EXT1 après basculement de canal de communication.

Préférentiellement, le dispositif noeud maître vérifie que tous les dispositifs noeuds du réseau d'acheminement ont bien appliqué le changement de canal de communication pour leurs interfaces radio WLAN_IF2 112 respectives. Les rattachements des dispositifs noeuds les uns aux autres peuvent avoir changer suite à ce changement de canal de communication, c'est-à-dire que le réseau d'acheminement a changé de topologie. Si au moins un dispositif noeud manque à l'appel suite au changement de canal de communication, alors le dispositif noeud maître peut soit instruire de revenir au canal de communication précédemment utilisé pour laisser une chance à chaque dispositif noeud de réintégrer le réseau d'acheminement, ou le dispositif noeud maître peut soit décider de continuer d'opérer sur le canal de communication nouvellement configuré.

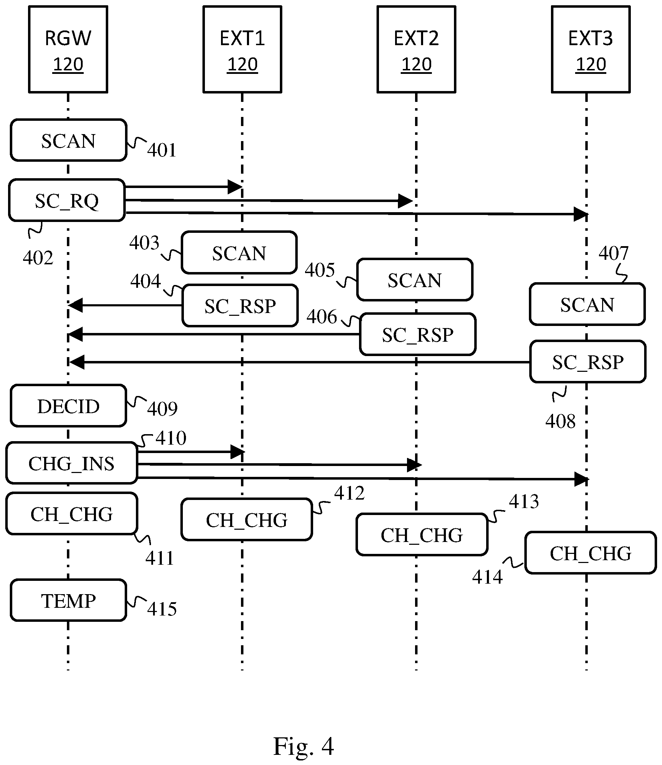

La Fig. 4 illustre schématiquement un autre exemple d'échanges dans le cadre d'une sélection de canal de communication dans le réseau local sans-fil WLAN 100. Plus particulièrement, les échanges de la Fig. 4 s'opèrent dans le cadre d'une sélection de canal de communication à utiliser pour supporter le réseau d'acheminement, lorsque le dispositif noeud maître évalue qu'un autre canal de communication serait, de son point de vue, plus adapté pour supporter le réseau d'acheminement et/ou un réseau frontal opérant sur le même canal que ledit réseau d'acheminement au vu des conditions de transmission (émission et/ou réception) de son environnement radio.

Comme les autres dispositifs noeuds du réseau d'acheminement, le dispositif noeud maître effectue régulièrement des évaluations des conditions de transmission (émission et/ou réception) de son environnement radio. Ainsi, dans une étape 401, la passerelle résidentielle RGW 110 effectue préférentiellement un scan de son environnement radio, comme déjà décrit. Puis, la passerelle résidentielle RGW 110 calcule le score $S_i$ attribué à chaque canal de communication $i$ à disposition de son interface radio WLAN_IF2 112. Si le canal de communication Ch_b actuellement utilisé pour le réseau d'acheminement montre un score supérieur ou égal à celui de chacun des autres canaux de communication évalués, la passerelle résidentielle RGW 110 attend de devoir réitérer les évaluations de conditions de transmission (e.g., opération de scan). Considérons que, comme dans le cadre des Figs. 3A et 3B, au moins un autre canal de communication montre un score supérieur au canal de communication en cours d'utilisation pour supporter le réseau d'acheminement. Alors, dans une étape 402, la passerelle résidentielle RGW 110 interroge les autres dispositifs noeuds du réseau d'acheminement pour évaluer la pertinence d'un changement du canal de communication utilisé par le réseau d'acheminement. Pour ce faire, la passerelle résidentielle RGW 110 leur transmet le message SC_RQ, comme déjà décrit. Alors, les extendeurs EXT1, EXT2 et EXT3 120 effectuent les évaluations de conditions de transmission (e.g., opération de scan) de leur environnement radio et effectuent les calculs de scores correspondants dans des étapes respectives 403, 405 et 407. Dans des étapes 404, 406 et 408, les extendeurs EXT1, EXT2 et EXT3 120 transmettent respectivement à la passerelle résidentielle RGW 110 les réponses SC_RSP incluant les scores pour les canaux de communication concernés, comme déjà décrit.

Dans une étape 409, le dispositif noeud maître décide, en fonction des scores obtenus, de changer ou pas le canal de communication utilisé pour supporter le réseau d'acheminement. Si le dispositif noeud maître décide de ne pas changer de canal de communication, les échanges s'interrompent ici, jusqu'à ce qu'un quelconque dispositif noeud du réseau d'acheminement détecte qu'un autre canal de communication soit plus adapté que celui en cours d'utilisation pour supporter le réseau d'acheminement. Le dispositif noeud maître peut s'appliquer une temporisation (étape 415) pendant laquelle la passerelle résidentielle RGW 110 s'interdit d'être à l'initiative d'une nouvelle évaluation de changement de canal de communication utilisé pour supporter le réseau d'acheminement. Si le dispositif noeud maître décide de changer de canal de communication, la passerelle résidentielle RGW 110 transmet alors à chaque autre dispositif noeud du réseau d'acheminement, dans une étape 410, le message CHG_INS instruisant de changer de changer de canal de communication et de basculer sur le canal de communication cible que ledit dispositif noeud maître a retenu. Dans une étape 411, la passerelle résidentielle RGW 110 configure son interface radio WLAN_IF2 112 pour communiquer via ledit canal de communication cible retenu. Les extendeurs EXT1, EXT2 et EXT3 120 font de même dans des étapes respectives 412, 413 et 414. Le dispositif noeud maître peut ensuite s'appliquer, ou pas, la temporisation de l'étape 415.

Une alternative à la Fig. 4 est que le dispositif noeud maître transmette en interne un message CHG_REQ, lorsqu'il souhaite initier une évaluation de changement de canal de communication pour supporter le réseau d'acheminement. L'enchaînement d'étapes résultant étant alors aisément dérivable de la description des Figs. 3A et 3B.

Dans un mode réalisation particulier, le dispositif noeud maître échange avec les autres dispositifs noeuds du réseau d'acheminement pour récolter des informations sur les capacités de mesurer telle ou telle métrique. Le dispositif noeud maître peut ainsi sélectionner les métriques applicables pour les calculs de scores en fonction de ces informations. Le dispositif noeud maître informe alors les autres dispositifs noeuds du réseau d'acheminement sur les métriques à utiliser pour les calculs de scores. Cela permet de définir dynamiquement quelles métriques utiliser dans un contexte où les dispositifs noeuds du réseau d'acheminement sont de conceptions diverses.

Dans un mode réalisation particulier, des tables de conversion pour mises à l'échelle sont utilisées par le dispositif noeud maître. Lorsque le dispositif noeud maître examine un score calculé par un dispositif noeud du réseau d'acheminement, le dispositif noeud maître effectue, grâce aux tables de conversion, une mise à l'échelle du score pour assurer que tous les scores sont calculés sur un même référentiel. Dans ce cas, chaque dispositif noeud qui transmet un score au dispositif noeud maître indique, en association avec ledit score, une valeur minimale et une valeur maximale possibles pour ledit score. Cela permet d'utiliser des interfaces radio qui opèrent le suivi de leurs métriques et effectuent les calculs de scores de façons diverses.

**Revendications**

1. Procédé pour sélectionner un canal de communication dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil,

   dans lequel un même premier canal de communication, sélectionné par un dispositif noeud maître du réseau d'acheminement, est utilisé dans le réseau d'acheminement pour interconnecter lesdits dispositifs noeuds,
   **caractérisé en ce que** le procédé comporte les étapes suivantes effectuées par chaque dispositif noeud du réseau d'acheminement :

   - effectuer (301) une évaluation de conditions de transmission de son environnement radio,
   - calculer (301) , pour chaque canal de communication à disposition dudit dispositif noeud, un score représentatif d'une qualité de transmission via ledit canal de communication d'après l'évaluation effectuée,

   et **en ce que** lorsque, du point de vue d'un dit dispositif noeud du réseau d'acheminement, au moins un second canal de communication montre un meilleur score que le premier canal de communication, le procédé comporte en outre les étapes suivantes effectuées par le dispositif noeud maître :

   - obtenir (309), de chaque dispositif noeud du réseau d'acheminement, le score du premier canal de communication et le score d'au moins un dit second canal de communication, pour effectuer une évaluation de changement de canal de communication ;
   - décider de changer (309), ou pas, de canal de communication utilisé dans le réseau d'acheminement, en fonction des scores obtenus.

**2.** Procédé selon la revendication 1, dans lequel, suite à l'évaluation de conditions de transmission de son environnement radio, lorsqu'un dispositif noeud autre que le dispositif noeud maître évalue qu'au moins un second canal de communication montre un meilleur score que le premier canal de communication, le dispositif noeud en question transmet audit dispositif noeud maître un message de demande de changement de canal de communication incluant, au moins, un identifiant dudit au moins un second canal de communication ayant obtenu le meilleur score et son score, ainsi que le score obtenu par le premier canal de communication,
et dans lequel le dispositif noeud maître sonde chacun des dispositifs noeuds du réseau d'acheminement autres que celui ayant transmis ledit message de demande de changement de canal de communication pour obtenir le score de chaque canal de communication auquel se réfère le message de demande de changement de canal de communication.

**3.** Procédé selon la revendication 1 ou 2, dans lequel le score $S_i$ attribué à chaque canal de communication $i$ est une somme pondérée de notes $n_{i,j}$ attribuées à différentes métriques $j$ suite à l'évaluation des conditions de transmission de l'environnement radio vis-à-vis dudit canal de communication $i$, en utilisant des poids prédéterminés $\alpha_{i,j}$ servant à privilégier une métrique plutôt qu'une autre pour le canal de communication $i$, de sorte que :

$$S_i = \sum_j \alpha_{i,j} . n_{i,j}$$

avec

$$\forall i, \forall j, \sum_j \alpha_{i,j} = 1$$

**4.** Procédé selon la revendication 3, dans lequel lorsqu'une métrique n'est pas observable pour le canal de communication $i$, une note maximale est attribuée à ladite métrique, ou ladite métrique est sortie du calcul de score sans ajuster les poids des autres métriques, ou ladite métrique est sortie du calcul de score en ajustant proportionnellement les poids des autres métriques pour assurer que leur somme soit égale à 1.

**5.** Procédé selon la revendication 3 ou 4, dans lequel les métriques sont choisies parmi :

- un niveau bruit ambiant pour le canal de communication $i$,
- une quantité de points d'accès détectés sur le canal de communication $i$, hors points d'accès du réseau d'acheminement,
- une proportion du temps où le canal de communication $i$ est vu comme libre,
- un taux de paquets retransmis,
- une quantité de points d'accès, hors points d'accès du réseau d'acheminement, utilisant un canal de communication adjacent au canal de communication $i$,
- une quantité de points d'accès, hors points d'accès du réseau d'acheminement, détectés avec une puissance supérieure à un seuil prédéterminé.

**6.** Procédé selon l'une quelconque des revendications 1 à 5, dans lequel le dispositif noeud maître détermine le gain ou la perte $\delta_{c \to t}(k)$, pour chaque dispositif noeud $k$, de basculer du premier canal de communication c vers un second canal de communication cible t de la façon suivante :

$$\delta_{c \to t}(k) = s_t(k) - s_c(k)$$

où $s_t(k)$ est le score pour le premier canal de communication c et $s_t(k)$ est le score pour le second canal de communication cible t.

**7.** Procédé selon la revendication 6, dans lequel le dispositif noeud maître estime le gain ou la perte à utiliser le second canal de communication cible t à la place du premier canal de communication c pour l'ensemble du réseau d'acheminement, grâce à une fonction de coût comme suit :

$$\Delta_{c\to t} = \sum_k \gamma_k\, \delta_{c\to t}(k) = \sum_k \gamma_k\big(s_t(k) - s_c(k)\big)$$

où $\gamma_k$ sont des coefficients de pondérations définis afin de prendre en compte le type de trafic en cours sur le premier canal de communication c, tel que rapporté par chaque dispositif noeud *k* du réseau d'acheminement.

8. Procédé selon l'une quelconque des revendications 1 à 7, dans lequel lorsque le dispositif noeud maître a décidé de changer ou pas de canal de communication pour le réseau d'acheminement, le dispositif noeud ayant initié l'évaluation de changement de canal de communication déclenche une temporisation, pendant laquelle il n'est pas autorisé à initier une nouvelle évaluation de changement de canal de communication.

9. Procédé pour sélectionner un canal de communication dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil,

   dans lequel un même premier canal de communication, sélectionné par un dispositif noeud maître du réseau d'acheminement, est utilisé dans le réseau d'acheminement pour interconnecter lesdits dispositifs noeuds, **caractérisé en ce que** le procédé comporte les étapes suivantes effectuées par un dispositif noeud du réseau d'acheminement autre que le dispositif noeud maître :

   - effectuer (301) une évaluation de conditions de transmission de son environnement radio,
   - calculer(301), pour chaque canal de communication à disposition dudit dispositif noeud, un score représentatif d'une qualité de transmission via ledit canal de communication d'après l'évaluation effectuée,
   - lorsqu'au moins un second canal de communication montre un meilleur score que le premier canal de communication, initier auprès dudit dispositif noeud maître une évaluation de changement de canal de communication au profit d'un dit second canal de communication ;
   - attendre une décision du dispositif noeud maître de changer, ou pas, de canal de communication utilisé dans le réseau d'acheminement.

10. Produit programme d'ordinateur comportant des instructions pour implémenter, par un processeur, le procédé selon la revendication 9 , lorsque ledit programme est exécuté par ledit processeur.

11. Support de stockage d'informations stockant un programme d'ordinateur comprenant des instructions pour implémenter, par un processeur, le procédé selon la revendication 9, lorsque ledit programme est lu et exécuté par ledit processeur.

12. Dispositif noeud destiné à être utilisé dans un réseau de communication sans-fil comportant un réseau d'acheminement interconnectant ledit dispositif noeud avec d'autres dispositifs noeuds et destiné à étendre une couverture radio d'un réseau frontal sans-fil par mise en oeuvre d'une pluralité de points d'accès du réseau frontal sans-fil,

   dans lequel un même canal de communication, sélectionné par un dispositif noeud maître du réseau d'acheminement, est utilisé dans le réseau d'acheminement pour interconnecter lesdits dispositifs noeuds, **caractérisé en ce qu'**il comporte :

   - des moyens pour effectuer une évaluation de conditions de transmission de son environnement radio,
   - des moyens pour calculer, pour chaque canal de communication à disposition dudit dispositif noeud, un score représentatif d'une qualité de transmission via ledit canal de communication d'après l'évaluation effectuée,
   - lorsqu'au moins un second canal de communication montre un meilleur score que le premier canal de communication, des moyens pour initier auprès dudit dispositif noeud maître une évaluation de changement de canal de communication au profit d'un dit second canal de communication ;
   - des moyens pour attendre une décision du dispositif noeud maître de changer, ou pas, de canal de communication utilisé dans le réseau d'acheminement.

13. Dispositif noeud maître destiné à être utilisé dans un réseau de communication sans-fil comportant un réseau d'acheminement interconnectant des dispositifs noeuds et destiné à étendre une couverture radio d'un réseau frontal sans-fil par mise en oeuvre d'une pluralité de points d'accès du réseau frontal sans-fil,

dans lequel un même premier canal de communication, sélectionné par le dispositif noeud maître, est utilisé dans le réseau d'acheminement pour interconnecter lesdits dispositifs noeuds,
**caractérisé en ce qu'**il comporte :

- des moyens (301) pour effectuer une évaluation de conditions de transmission de son environnement radio,
- des moyens (301) pour calculer, pour chaque canal de communication à disposition dudit dispositif noeud maître, un score représentatif d'une qualité de transmission via ledit canal de communication d'après l'évaluation effectuée,

et **en ce que** lorsque, du point de vue du dispositif noeud maître ou d'un autre dispositif noeud du réseau d'acheminement, au moins un second canal de communication montre un meilleur score que le premier canal de communication, le dispositif noeud maître comporte en outre :

- des moyens (309) pour obtenir, de chaque autre dispositif noeud du réseau d'acheminement, le score du premier canal de communication et le score d'au moins un dit second canal de communication, pour effectuer une évaluation de changement de canal de communication ;
- des moyens (309) pour décider de changer, ou pas, de canal de communication utilisé dans le réseau d'acheminement, en fonction des scores obtenus.

14. Réseau de communication sans-fil comportant un réseau d'acheminement interconnectant des dispositifs noeuds selon la revendication 12 et un dispositif noeud maître selon la revendication 13, pour étendre une couverture radio d'un réseau frontal sans-fil par mise en oeuvre d'une pluralité de points d'accès du réseau frontal sans-fil.

**Patentansprüche**

1. Verfahren zur Auswahl eines Kommunikationskanals in einem drahtlosen Kommunikationsnetzwerk, das ein Backhaul-Netzwerk aufweist, das Knotenvorrichtungen miteinander vernetzt und dazu bestimmt ist, eine Funkabdeckung eines drahtlosen Fronthaul-Netzwerks durch Anwendung einer Vielzahl von Zugangspunkten des drahtlosen Fronthaul-Netzwerks zu erweitern,

wobei ein gleicher erster Kommunikationskanal, ausgewählt von einer Master-Knotenvorrichtung des Backhaul-Netzwerks, im Backhaul-Netzwerk verwendet wird, um die Knotenvorrichtungen miteinander zu vernetzen, **dadurch gekennzeichnet, dass** das Verfahren die folgenden Schritte aufweist, die von jeder Knotenvorrichtung des Backhaul-Netzwerks ausgeführt werden:

- Ausführung (301) einer Abschätzung von Übertragungsbedingungen ihrer Funkumgebung,
- Berechnung (301), für jeden der Knotenvorrichtung zur Verfügung stehenden Kommunikationskanal, eines für eine Übertragungsqualität über den Kommunikationskanal entsprechend der ausgeführten Abschätzung repräsentativen Scores,

und dass, wenn aus Sicht einer Knotenvorrichtung des Backhaul-Netzwerks mindestens ein zweiter Kommunikationskanal einen besseren Score zeigt als der erste Kommunikationskanal, das Verfahren außerdem die folgenden Schritte aufweist, die von der Master-Knotenvorrichtung ausgeführt werden:

- Erhalt (309), von jeder Knotenvorrichtung des Backhaul-Netzwerks, des Scores des ersten Kommunikationskanals und des Scores mindestens eines zweiten Kommunikationskanals, um eine Kommunikationskanal-Änderungsabschätzung auszuführen;
- Entscheidung (309), einen im Backhaul-Netzwerk verwendeten Kommunikationskanal zu ändern oder nicht, abhängig von den erhaltenen Scores.

2. Verfahren nach Anspruch 1, wobei, nach der Abschätzung von Übertragungsbedingungen ihrer Funkumgebung, wenn eine andere Knotenvorrichtung als die Master-Knotenvorrichtung abschätzt, dass mindestens ein zweiter Kommunikationskanal einen besseren Score zeigt als der erste Kommunikationskanal, die betreffende Knotenvorrichtung eine Kommunikationskanal-Änderungsantragsnachricht an die Master-Knotenvorrichtung überträgt, die mindestens eine Kennung des mindestens einen zweiten Kommunikationskanals, der den besten Score erhalten hat, und seinen Score sowie den Score enthält, der vom ersten Kommunikationskanal erhalten wurde, und wobei die Master-Knotenvorrichtung jede der Knotenvorrichtungen des Backhaul-Netzwerks anders als diejenige untersucht, die die Kommunikationskanal-Änderungsantragsnachricht übertragen hat, um den Score jedes Kommunikationskanals zu erhalten, auf den sich die Kommunikationskanal-Änderungsantragsnachricht bezieht.

3. Verfahren nach Anspruch 1 oder 2, wobei der jedem Kommunikationskanal i zugewiesene Score $S_i$ eine gewichtete Summe von Noten $n_{i,j}$ ist, die verschiedenen Metriken j nach der Abschätzung der Übertragungsbedingungen der Funkumgebung gegenüber dem Kommunikationskanal i zugewiesen werden, unter Verwendung vorbestimmter Gewichte $\alpha_{i,j}$, die dazu dienen, eine Metrik eher als eine andere für den Kommunikationskanal i zu privilegieren, so dass:

$$\overline{S_i} = \sum_j \alpha_{i,j} , n_{i,j}$$

mit

$$\forall i, \forall j, \sum_j \alpha_{i,j} = 1$$

4. Verfahren nach Anspruch 3, wobei, wenn eine Metrik für den Kommunikationskanal i nicht wahrnehmbar ist, der Metrik eine maximale Note zugewiesen wird, oder die Metrik aus der Score-Berechnung herausgenommen wird, ohne die Gewichte der anderen Metriken anzupassen, oder die Metrik aus der Score-Berechnung herausgenommen wird, indem die Gewichte der anderen Metriken proportional angepasst werden, um zu gewährleisten, dass ihre Summe gleich 1 ist.

5. Verfahren nach Anspruch 3 oder 4, wobei die Metriken ausgewählt werden unter:

   - einem Umgebungsrauschpegel für den Kommunikationskanal i,
   - einer Menge von auf dem Kommunikationskanal i erkannten Zugangspunkten, außer Zugangspunkten des Backhaul-Netzwerks,
   - einem Anteil der Zeit, in der der Kommunikationskanal i als frei gesehen wird,
   - einer Rate rückübertragener Pakete,
   - einer Menge von Zugangspunkten, außer Zugangspunkten des Backhaul-Netzwerks, die einen dem Kommunikationskanal i benachbarten Kommunikationskanal verwenden,
   - eine Menge von Zugangspunkten, außer Zugangspunkten des Backhaul-Netzwerks, die mit einer Leistung höher als eine vorbestimmte Schwelle erkannt werden.

6. Verfahren nach einem der Ansprüche 1 bis 5, wobei die Master-Knotenvorrichtung den Gewinn oder den Verlust $\delta_{c \to t}(k)$, für jede Knotenvorrichtung k, des Umschaltens vom ersten Kommunikationskanal c zu einem zweiten Ziel-Kommunikationskanal t folgendermaßen bestimmt:

$$\delta_{c \to t}(k) = s_t(k) - s_c(k)$$

wobei $s_t(k)$ der Score für den ersten Kommunikationskanal c und $s_t(k)$ der Score für den zweiten Ziel-Kommunikationskanal t ist.

7. Verfahren nach Anspruch 6, wobei die Master-Knotenvorrichtung den Gewinn oder den Verlust bei der Verwendung des zweiten Ziel-Kommunikationskanals t anstelle des ersten Kommunikationskanals c für die Gesamtheit des Backhaul-Netzwerks dank einer Kostenfunktion wie folgt schätzt:

$$\Delta_{c \to t} = \sum_k y_k \delta_{c \to t}(k) = \sum_k y_k \big( S_t(k) - s_c(k) \big)$$

wobei $y_k$ definierte Gewichtungskoeffizienten sind, um die Art des aktuellen Verkehrs auf dem ersten Kommunikationskanal c zu berücksichtigen, wie er von jeder Knotenvorrichtung k des Backhaul-Netzwerks berichtet wird.

8. Verfahren nach einem der Ansprüche 1 bis 7, wobei, wenn die Master-Knotenvorrichtung entschieden hat, einen Kommunikationskanal für das Backhaul-Netzwerk zu ändern oder nicht, die Knotenvorrichtung, die die Kommunikationskanal-Änderungsabschätzung initiiert hat, eine Verzögerung auslöst, während der sie nicht berechtigt ist, eine neue Kommunikationskanal-Änderungsabschätzung zu initiieren.

9. Verfahren zur Auswahl eines Kommunikationskanals in einem drahtlosen Kommunikationsnetzwerk, das ein Backhaul-Netzwerk aufweist, das Knotenvorrichtungen miteinander vernetzt und dazu bestimmt ist, eine Funkabdeckung eines drahtlosen Fronthaul-Netzwerks durch Anwendung einer Vielzahl von Zugangspunkten des drahtlosen Fronthaul-Netzwerks zu erweitern,

    wobei ein gleicher erster Kommunikationskanal, ausgewählt von einer Master-Knotenvorrichtung des Backhaul-Netzwerks, im Backhaul-Netzwerk verwendet wird, um die Knotenvorrichtungen miteinander zu vernetzen, **dadurch gekennzeichnet, dass** das Verfahren die folgenden Schritte aufweist, die von einer anderen Knotenvorrichtung des Backhaul-Netzwerks als die Master-Knotenvorrichtung ausgeführt werden:

    - Ausführung (301) einer Abschätzung von Übertragungsbedingungen ihrer Funkumgebung,
    - Berechnung (301), für jeden der Knotenvorrichtung zur Verfügung stehenden Kommunikationskanal, eines für eine Übertragungsqualität über den Kommunikationskanal entsprechend der ausgeführten Abschätzung repräsentativen Scores,
    - wenn mindestens ein zweiter Kommunikationskanal einen besseren Score zeigt als der erste Kommunikationskanal, Initiieren bei der Master-Knotenvorrichtung einer Kommunikationskanal-Änderungsabschätzung zugunsten eines zweiten Kommunikationskanals;
    - Abwarten einer Entscheidung der Master-Knotenvorrichtung, einen im Backhaul-Netzwerk verwendeten Kommunikationskanal zu ändern oder nicht.

10. Computerprogrammprodukt, das Anweisungen aufweist, um das Verfahren nach Anspruch 9 durch einen Prozessor zu implementieren, wenn das Programm von dem Prozessor ausgeführt wird.

11. Informationsspeicherträger, der ein Computerprogramm speichert, das Anweisungen enthält, um das Verfahren nach Anspruch 9 durch einen Prozessor zu implementieren, wenn das Programm von dem Prozessor ausgeführt wird.

12. Knotenvorrichtung, die dazu bestimmt ist, in einem drahtlosen Kommunikationsnetzwerk verwendet zu werden, das ein Backhaul-Netzwerk aufweist, das die Knotenvorrichtung mit anderen Knotenvorrichtungen vernetzt und dazu bestimmt ist, eine Funkabdeckung eines drahtlosen Fronthaul-Netzwerks durch Anwendung einer Vielzahl von Zugangspunkten des drahtlosen Fronthaul-Netzwerks zu erweitern,

    wobei ein gleicher Kommunikationskanal, ausgewählt von einer Master-Knotenvorrichtung des Backhaul-Netzwerks, im Backhaul-Netzwerk verwendet wird, um die Knotenvorrichtungen miteinander zu vernetzen, **dadurch gekennzeichnet, dass** sie aufweist:

    - Einrichtungen, um eine Abschätzung von Übertragungsbedingungen ihrer Funkumgebung auszuführen,
    - Einrichtungen, um für jeden der Knotenvorrichtung zur Verfügung stehenden Kommunikationskanal einen für eine Übertragungsqualität über den Kommunikationskanal entsprechend der ausgeführten Abschätzung repräsentativen Score zu berechnen,
    - wenn mindestens ein zweiter Kommunikationskanal einen besseren Score zeigt als der erste Kommunikationskanal, Einrichtungen, um bei der Master-Knotenvorrichtung eine Kommunikationskanal-Änderungsabschätzung zugunsten eines zweiten Kommunikationskanals zu initiieren;
    - Einrichtungen, um eine Entscheidung der Master-Knotenvorrichtung abzuwarten, einen im Backhaul-Netzwerk verwendeten Kommunikationskanal zu ändern oder nicht.

13. Master-Knotenvorrichtung, die dazu bestimmt ist, in einem drahtlosen Kommunikationsnetzwerk verwendet zu werden, das ein Backhaul-Netzwerk aufweist, das Knotenvorrichtungen miteinander vernetzt und dazu bestimmt ist, eine Funkabdeckung eines drahtlosen Fronthaul-Netzwerks durch Anwendung einer Vielzahl von Zugangspunkten des drahtlosen Fronthaul-Netzwerks zu erweitern, wobei ein gleicher erster Kommunikationskanal, ausgewählt von der Master-Knotenvorrichtung, im Backhaul-Netzwerk verwendet wird, um die Knotenvorrichtungen miteinander zu vernetzen,

**dadurch gekennzeichnet, dass** sie aufweist:

- Einrichtungen (301), um eine Abschätzung von Übertragungsbedingungen ihrer Funkumgebung auszuführen,
- Einrichtungen (301), um für jeden der Master-Knotenvorrichtung zur Verfügung stehenden Kommunikationskanal einen für eine Übertragungsqualität über den Kommunikationskanal entsprechend der ausgeführten Abschätzung repräsentativen Score zu berechnen,

und dass, wenn aus Sicht der Master-Knotenvorrichtung oder einer anderen Knotenvorrichtung des Backhaul-Netzwerks mindestens ein zweiter Kommunikationskanal einen besseren Score als der erste Kommunikationskanal zeigt, die Master-Knotenvorrichtung außerdem aufweist:

- Einrichtungen (309), um von jeder anderen Knotenvorrichtung des Backhaul-Netzwerks den Score des ersten Kommunikationskanals und den Score mindestens eines zweiten Kommunikationskanals zu erhalten, um eine Kommunikationskanal-Änderungsabschätzung auszuführen;
- Einrichtungen (309), um zu entscheiden, einen im Backhaul-Netzwerk verwendeten Kommunikationskanal abhängig von den erhaltenen Scores zu ändern oder nicht.

14. Drahtloses Kommunikationsnetzwerk, das ein Backhaul-Netzwerk aufweist, das Knotenvorrichtungen nach Anspruch 12 und eine Master-Knotenvorrichtung nach Anspruch 13 miteinander vernetzt, um eine Funkabdeckung eines drahtlosen Fronthaul-Netzwerks durch Anwendung einer Vielzahl von Zugangspunkten des drahtlosen Fronthaul-Netzwerks zu erweitern.

## Claims

1. Method for selecting a communication channel in a wireless communication network comprising a backhaul network interconnecting node devices and intended to extend a radio coverage of a wireless fronthaul network by using a plurality of access points of the wireless fronthaul network,

   wherein one and the same first communication channel, selected by a master node device of the backhaul network, is used in the backhaul network to interconnect said node devices,
   **characterised in that** the method comprises the following steps performed by each node device of the backhaul network:

   - making (301) an evaluation of transmission conditions of its radio environment,
   - calculating (301), for each communication channel available to said node device, a score representing a quality of transmission via said communication device according to the evaluation made,

   and **in that** when, from the point of view of a said node device of the backhaul network, at least one second communication channel shows a better score than the first communication channel, the method further comprises the following steps performed by the master node device:

   - obtaining (309), from each node device of the backhaul network, the score of the first communication channel and the score of at least one said second communication channel, to make an evaluation of change of communication channel;
   - deciding to change (309), or not, communication channel used in the backhaul network, according to the scores obtained.

2. Method according to claim 1, wherein, following the evaluation of transmission conditions of its radio environment, when a node device other than the master node device assesses that at least one second communication channel shows a better score than the first communication channel, the node device in question transmits to said master node device a message requesting change of communication channel including at least an identifier of said at least one second communication channel that obtained the better score and its score, as well as the score obtained by the first communication channel, and wherein the master node device sounds each of the node devices of the backhaul network other than the one that transmitted said message requesting change of communication channel in order to obtain the score of each communication channel to which the message requesting change of communication channel refers.

3. Method according to claim 1 or 2, wherein the score $S_i$ attributed to each communication channel $i$ is a weighted sum of marks $n_{i,j}$ attributed to various metrics $j$ following the evaluation of the transmission conditions of the radio environment with respect to said communication channel $i$, using predetermined weights $\alpha_{i,j}$ serving to privilege one metric rather than another for the communication channel $i$, so that:

$$S_i = \sum_j \alpha_{i,j}.n_{i,j}$$

with

$$\forall i, \forall j, \sum_j \alpha_{i,j} = 1$$

4. Method according to claim 3, wherein, when a metric is not observable for the communication channel $i$, a maximum mark is attributed to said metric, or said metric is taken out of the score calculation without adjusting the weight of the other metrics, or said metric is taken out of the score calculation while proportionally adjusting the weights of the other metrics in order to ensure that the sum thereof is equal to 1.

5. Method according to claim 3 or 4, wherein the metrics are selected from:

 - an ambient noise level for the communication channel $i$,
 - a quantity of access points detected on the communication channel $i$, apart from access points of the backhaul network,
 - a proportion of the time where the communication channel $i$ is seen as free,
 - a proportion of packets retransmitted,
 - a quantity of access points, apart from access points of the backhaul network, using a communication channel adjacent to the communication channel $i$,
 - a quantity of access points, apart from access points of the backhaul network, detected with a power above a predetermined threshold.

6. Method according to any one of claims 1 to 5, wherein the master node device determines the gain or loss $\delta_{c\rightarrow t}(k)$, for each node device $k$, in switching from the first communication channel $c$ to a target second communication channel $t$ in the following manner:

$$\delta_{c\rightarrow t}(k) = s_t(k) - s_c(k)$$

where $s_t(k)$ is the score for the first communication channel $c$ and $s_t(k)$ is the score for the target second communication channel t.

7. Method according to claim 6, wherein the master node device estimates the gain or the loss in using the target second communication channel t in place of the first communication channel c for the whole of the backhaul network, by means of a cost function as follows:

$$\Delta_{c\rightarrow t} = \sum_k \gamma_k\, \delta_{c\rightarrow t}(k) = \sum_k \gamma_k\big(s_t(k) - s_c(k)\big)$$

where $\gamma_k$ are weighting coefficients defined in order to take into account the type of traffic taking place on the first communication channel c, as reported by each node device $k$ of the backhaul network.

8. Method according to any one of claims 1 to 7, wherein, when the master node device has decided to change, or not, communication channel for the backhaul network, the node device that initiated the evaluation of change of communication channel triggers a time delay, during which it is not enabled to initiate a new evaluation of change of communication channel.

9. Method for selecting a communication channel in a wireless communication network comprising a backhaul network interconnecting node devices and intended to extend a radio coverage of a wireless fronthaul network by using a plurality of access points of the wireless fronthaul network,

wherein the same first communication channel, selected by a master node device of the backhaul network, is used in the backhaul network to interconnect said node devices,
**characterised in that** the method comprises the following steps performed by a node device of the backhaul network other than the master node device:

- making (301) an evaluation of transmission conditions of its radio environment,
- calculating (301), for each communication channel available to said node device, a score representing a quality of transmission via said communication channel according to the evaluation made,
- when at least one second communication channel shows a better score than the first communication channel, initiating, with said master node device, an evaluation of change of communication channel in favour of a said second communication channel;
- awaiting a decision of the master node device to change, or not, communication channel used in the backhaul network.

10. Computer program product comprising instructions for implementing, by a processor, the method according to claim 9, when said program is executed by said processor.

11. Information storage medium storing a computer program comprising instructions for implementing, by a processor, the method according to claim 9, when said program is read and executed by said processor.

12. Node device intended to be used in a wireless communication network comprising a backhaul network interconnecting said node device with other node devices and intended to extend a radio coverage of a wireless fronthaul network by using a plurality of access points of the wireless fronthaul network,

wherein the same communication channel, selected by a master node device of the backhaul network, is used in the backhaul network for interconnecting said node devices,
**characterised in that** it comprises:

- means for making an evaluation of transmission conditions of its radio environment,
- means for calculating, for each communication channel available to said node device, a score representing a quality of transmission via said communication channel according to the evaluation made,
- when at least one second communication channel shows a better score than the first communication channel, means for initiating, with said master node device, an evaluation of change of communication channel in favour of a said second communication channel;
- means for awaiting a decision of said master node to change, or not, communication channel used in the backhaul network.

13. Master node device intended to be used in a wireless communication network comprising a backhaul network interconnecting node devices and intended to extend a radio coverage of a wireless fronthaul network by using a plurality of access points of the wireless fronthaul network,

wherein one and the same first communication channel, selected by the master node device, is used in the backhaul network for interconnecting said node devices,
**characterised in that** it comprises:

- means (301) for making an evaluation of transmission conditions of its radio environment;
- means (301) for calculating, for each communication channel available to said master node device, a score representing a quality of transmission via said communication channel according to the evaluation made,

and **in that** when, from the point of view of the master node device or of another node device of the backhaul network, at least one second communication channel shows a better score than the first communication channel, the master node device further comprises:

- means (309) for obtaining, from each other node device of the backhaul network, the score of the first communication channel and the score of at least one said second communication channel, for making an evaluation of change of communication channel;

- means (309) for deciding to change, or not, communication channel used in the backhaul network according to the scores obtained.

14. Wireless communication network comprising a backhaul network interconnecting node devices according to claim 12 and a master node device according to claim 13, for extending a radio coverage of a wireless fronthaul network by using a plurality of access points of the wireless fronthaul network.

Fig. 1

Fig. 2

Fig. 3A

Fig. 3B

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020119836 A

- EP 2907334 A